# EUROPÄISCHE PATENTSCHRIFT

(11) **EP 3 806 254 B1**
(45) Veröffentlichungstag und Bekanntmachung des Hinweises auf die Patenterteilung: **03.08.2022**
(21) Anmeldenummer: 20200460.2
(22) Anmeldetag: 07.10.2020
(51) Int. Cl.: H02G 3/22, H02G 3/30, H02G 3/38, H02G 15/013, H02G 15/32, H02G 3/04, F16L 5/02

(54) **VORRICHTUNG ZUM DURCHFÜHREN EINER LEITUNG, INSBESONDERE EINER SPEEDPIPE DURCH EINE WANDBOHRUNG**
DEVICE FOR GUIDING A LINE, PARTICULARLY A SPEED PIPE, THROUGH A WALL OPENING
DISPOSITIF DE PASSAGE D'UNE CONDUITE, EN PARTICULIER D'UN SPEED PIPE À TRAVERS UN ALÉSAGE MURAL

(30) Priorität: 09.10.2019 DE 102019127122
(43) Veröffentlichungstag der Anmeldung: 14.04.2021
(73) Patentinhaber: Langmatz GmbH, 82467 Garmisch-Partenkirchen (DE)
(72) Erfinder:
(74) Vertreter: Flosdorff, Jürgen

(56) Entgegenhaltungen:
- EP-A1- 2 410 222
- EP-A1- 3 038 220
- DE-U1- 9 001 219

## Beschreibung

Die Erfindung betrifft eine Vorrichtung zum Durchführen einer Leitung durch eine durch eine Gebäudewand führende Wandbohrung, mit einem die Bohrung an der Gebäudeaußenseite überdeckenden, an der Gebäudewand anliegenden Außenflansch, der ein Loch zum Durchführen der Leitung hat, und mit einem die Bohrung an der Gebäudeinnenseite überdeckenden, an der Gebäudewand anliegenden Innenflansch, durch den die Leitung ebenfalls hindurchführbar ist, wobei beide Flansche Mittel zum Festklemmen am Rand der Bohrung haben. Die vorliegende Erfindung befasst sich vor allem mit der Ausbildung des Außenflanschs. Aus der EP 2 410 222 A1 ist eine Vorrichtung zum Befestigen und Abdichten einer durch eine Wandöffnung einer Gebäudewand führenden Leitung bekannt, wobei es sich bei der Leitung um ein Leerrohr handelt, das beispielsweise ein Wasserrohr, ein Gasrohr oder eine Telekommunikationsleitung aufnimmt. Dieses Leerrohr erfordert eine Wandbohrung bzw. Kernlochbohrung eines Durchmessers von wenigstens 40mm, deren Ausbildung mit einem beträchtlichen Aufwand verbunden ist.

Bei dem vorliegenden Anmeldungsgegenstand geht es darum, dass eine Leitung, vorzugsweise eine Speedpipe, ohne ein Schutzrohr durch die Wandbohrung hindurchgeführt werden soll, wobei die Speedpipe meist einen Durchmesser von 7 mm, 10 mm oder 12 mm hat, so dass die Wandbohrung nur einen Durchmesser von etwa 20 bis 25 mm haben muss.

Wenn eine derartige Leitung in ein Gebäude eingeführt wird, muss sie in der Wand mechanisch befestigt werden, und der Zwischenraum zwischen der Leitung und der Wand muss gegen den Durchtritt von Wasser und auch Gas abgedichtet werden. Hierzu ist es aus der EP 2 410 222 A1 bekannt, das Leerrohr mit einem Lochrohr größeren Durchmessers zu umgeben. In dieses Lochrohr wird gemäß der EP 2 410 222 A1 eine zunächst fließfähige, dann aufschäumende und erhärtende Füllsubstanz eingefüllt, die aus einer Vielzahl von über den Umfang verteilten kleinen Löchern aus dem umgebenden Rohr austritt und Hohlräume in der Wandbohrung ausfüllt, so dass der Zwischenraum der Wandbohrung abgedichtet wird.

Da die Wandbohrung zum Durchführen einer Speedpipe nur einen verhältnismäßig kleinen Durchmesser hat, kann diese Wandbohrung durch eine Handbohrmaschine hergestellt werden, was mit einem verringerten Arbeitsaufwand verbunden ist. Die Bohrung kann sowohl horizontal als auch in einem variierenden Winkel zur Horizontalen verlaufen, wobei letzteres stets dann der Fall ist, wenn das Gebäude keinen Keller hat, so dass dann die Bohrung von außen nach innen schräg nach oben verläuft. In einigen Fällen kann die Bohrung auch schräg nach unten verlaufen, wobei alle auftretenden Winkel in einer Ebene liegen.

Die EP 3 038 220 A1 offenbart eine Leitungsdurchführung zum Hindurchführen einer Leitung durch eine Wandbohrung mit einem die Bohrung an der Gebäudeaußenseite überdeckenden, an der Gebäudewand anliegenden Außenflansch, durch den die Leitung hindurchführbar ist, und einem die Bohrung an der Gebäudeinnenseite überdeckenden, an der Gebäudewand anliegenden Innenflansch. Mit dem Außenflansch ist an dessen Innenseite eine Durchführungshülse schwenkbar verbunden, die die Leitung in der Bohrung mit radialem Abstand umgibt, wobei der Außenflansch sowohl bei horizontaler als auch in Winkeln hierzu durch die Gebäudewand führender Bohrung dicht an die Gebäudewand anpressbar ist. In den Ringraum zwischen der Durchführungshülse und der Laibung der Wandbohrung kann ein Harzmaterial injiziert werden, wobei das ausgehärtete Harz die Leitungsdurchführung in Position hält.

Die DE 90 01 219 U1 offenbart eine Mauerdurchführung für Kabel, die ebenfalls schräg durch die Wand gebracht werden kann. Dabei ist eine Kabelführungsbuchse an der Außenseite der Mauerdurchführung gegen die Gebäudewand abgedichtet, wobei in der Mauerdurchführung eine Dichtungsbuchse vorgesehen ist. Ein Kabelführungsschlauch ist mit einer Gewindebuchse auf die Kabelführungsbuchse aufgeschraubt und in gekrümmter Form in einem starren Schlauchkrümmer angeordnet, wodurch ein Kabelführungsbogen gebildet ist.

Der vorliegenden Erfindung liegt die Aufgabe zugrunde, eine Vorrichtung der betrachteten Art anzugeben, die sowohl für eine horizontale Wandbohrung als auch eine schräg verlaufende Wandbohrung verwendbar ist, wobei der Außenflansch wasserdicht und gasdicht an die Gebäudewand anpressbar sein soll.

Diese Aufgabe wird erfindungsgemäß durch die Merkmale des Patentanspruch 1 gelöst.

Vorteilhafte Ausbildungen der Erfindung sind in den Unteransprüchen gekennzeichnet.

Bei der erfindungsgemäßen Vorrichtung ist mit der Innenseite des Außenflanschs ein Lochrohr verbunden, das die Leitung, vorzugsweise die Speedpipe in der Bohrung wenigstens über einen Teil ihrer Länge mit radialem Abstand umgibt. Das Lochrohr ist gelenkig mit dem Außenflansch verbunden, so dass es bei an der Wand mit dem umlaufenden Randabschnitt dicht anliegendem Außenflansch auf den jeweiligen Verlauf der Wandbohrung ausgerichtet werden kann. Das Lochrohr kann dabei in seinem unteren Bereich der Einbaulage geschlossen sein und in den darüber liegenden Bereichen Löcher oder Schlitze haben, so dass die in das Lochrohr einzufüllende Dichtungssubstanz nicht einfach in der Wandbohrung nach unten ablaufen kann.

Das Lochrohr ist mit einem beidseitig im rechten Winkel abstehenden Rohrstück verbunden, dessen Hohlraum mit dem Hohlraum des Lochrohrs in Verbindung steht. Dieses Rohrstück bildet die Gelenkachse für das Lochrohr, wozu es in eine etwa halbzylindrische Lagerschale des Außenflanschs eingesetzt ist, in der das Rohrstück zusammen mit dem bevorzugt einstückig angeformten Lochrohr zwischen zwei Anschlägen schwenkbar ist. Damit ist das Lochrohr nach Art eines Scharniers in einer Ebene schwenkbar an dem Außenflansch befestigt.

Weiter ist vorgesehen, dass neben der Lagerschale eine Öffnung durch den Außenflansch führt, die mit dem Hohlraum des Rohrstücks in Verbindung steht, so dass von der Außenseite des Außenflanschs aus eine zunächst fließfähige, dann aufschäumende und erhärtende Füllsubstanz in das Lochrohr zuführbar ist. Als Füllsubstanz ist ein expandierendes Verpressharz besonders gut geeignet. Um das Einfüllen der Füllsubstanz zu erleichtern, ist bevorzugt ein kleiner Rohrstutzen an der Außenseite des Außenflanschs angeformt, dessen Öffnung durch den Außenflansch führt.

Die Erfindung sieht weiter vor, dass das die Gelenkachse bildende Rohrstück wenigstens eine Öffnung in ihrer zylindrischen Umfangswand hat, die je nach Winkellage des Lochrohrs von der Lagerschale überdeckt und damit verschlossen ist, oder aber zum Innenraum des Außenflanschs hin frei liegt, um im letzteren Fall einen Teil der zugeführten Füllsubstanz in den Innenraum des Außenflanschs abzugeben und diesen auszufüllen, so dass der an der Wand anliegende Außenflansch gegenüber der Wand abgedichtet ist.

Dabei kann vorgesehen sein, dass in der Wand der Lagerschale ebenfalls wenigstens eine Öffnung ausgebildet ist, die sich mit der wenigstens einen Öffnung des Rohrstücks bei einer bestimmten Schwenklage des Lochrohrs überdecken kann.

Bevorzugt ist, dass zwei Öffnungen in der zylindrischen Umfangswand des Rohrstücks und in der Wand der Lagerschale ausgebildet sind, die sich einzeln - nicht beide gleichzeitig - überdecken können. Diese zwei Öffnungen sind vorzugsweise seitlich zueinander versetzt und sollten eine unterschiedliche Größe haben. In näheren Einzelheiten wird vorgeschlagen, dass die kleinere Öffnung die Form eines Schlitzes hat, vorzugsweise in einer Größe von 3 × 10 mm, während die größere Öffnung eine quadratische Form mit einer Größe von bevorzugt 10 × 10 mm hat, ohne dass die Erfindung hierauf beschränkt ist. Die besondere Ausbildung und Anordnung der Öffnungen in der Umfangswand des Rohrstücks und in der Wand der Lagerschale dienen dem Zweck, den eingesenkten Innenraum des Außenflansches bei allen auftretenden Schwenkwinkeln des Lochrohres mit der aufgeschäumten Füllsubstanz auszufüllen, damit der Außenflansch die Wandbohrung abdichtet, um den Eintritt von Wasser und auch von Gas in die Wandbohrung zu verhindern.

Hierzu ist mit Vorteil vorgesehen, dass die kleinere, bevorzugt schlitzförmige Öffnung in der horizontalen Lage des Lochrohres geöffnet ist, in dem die zugehörige Öffnung in der das Rohrstück überdeckenden Lagerschale mit dieser Öffnung fluchtet, während die größere Öffnung durch die anliegende Lagerschale geschlossen ist. Wenn die Füllsubstanz bevorzugt durch ein Loch in der seitlichen Stirnwand des Rohrstücks in dessen Innenraum strömt, fließt der größte Teil der zunächst zähflüssigen Substanz in das Lochrohr und von dort in den Innenraum der Wandbohrung, während ein kleiner Teil durch die kleine Öffnung in den im wesentlichen konvexen Innenraum des Außenflansches strömt, um dann aufzuschäumen und diesen Innenraum auszufüllen.

Wenn die Wandbohrung von der Außenseite der Gebäudewand schräg nach unten verläuft, fließt die zugeführte Füllsubstanz erheblich schneller in das Lochrohr, so dass bei nach schräg nach unten weisender Lage des Lochrohres die größere Öffnung offen ist, so dass eine ausreichende Füllsubstanzmenge in den Innenraum des Außenflansches eintritt. In dieser Lage ist die kleinere Öffnung vorzugsweise geschlossen.

Wenn die Wandbohrung schräg nach oben verläuft, sollten beide Öffnungen in der Umfangswand des Rohrstücks von der Lagerschale überdeckt und damit geschlossen sein, damit nicht ein Großteil der zugeführten zähflüssigen Füllsubstanz in den Innenraum des Außenflanschs austritt, anstatt nach oben durch das Lochrohr gedrückt zu werden. In diesem Fall strömt ein Teil der Füllsubstanz, der durch die Löcher in dem Lochrohr austritt, an der Außenseite des Lochrohrs entlang zum Innenraum des Außenflansches zurück, so dass dieser auch in diesem Fall mit der aufgeschäumten Füllsubstanz ausgefüllt werden kann.

Auf die oben beschriebene Weise kann damit sichergestellt werden, dass bei allen auftretenden Neigungswinkeln der Wandbohrung der Außenflansch die Wandbohrung abdichten kann. Dabei ist bevorzugt, dass die gelenkige Verbindung zwischen dem Rohrstück und dem Außenflansch zwischen einem schräg nach oben weisenden Winkel von +45° und einem schräg nach unten weisenden Winkel von -45° liegen kann, wobei diese Endstellungen durch Anschläge der Lagerschale definiert sind.

Nach einem weiteren wesentlichen Merkmal der Erfindung kann der Außenflansch eine ovale Form haben mit dem bereits oben erwähnten eingesenkten Innenraum, der von vorzugsweise mehreren umlaufenden Dichtlippen begrenzt ist. Durch die ovale Form wird die Wandbohrung bei jedem auftretenden Winkel ausreichend von dem Außenflansch überdeckt, wobei ein unnötiger Materialverbrauch vermieden ist, den z.B. eine runde Form mit sich bringen würde.

Weitere Merkmale und Einzelheiten der Erfindung ergeben sich aus der nachfolgenden Beschreibung einer bevorzugten Ausführungsform sowie anhand der Zeichnungen. Dabei zeigen:
Figur 1 eine perspektivische Ansicht der Außenseite eines Außenflanschs der Vorrichtung;
Figur 2 eine perspektivische Ansicht eines Lochrohrs mit einem eine Gelenkachse bildenden Rohrstücks;

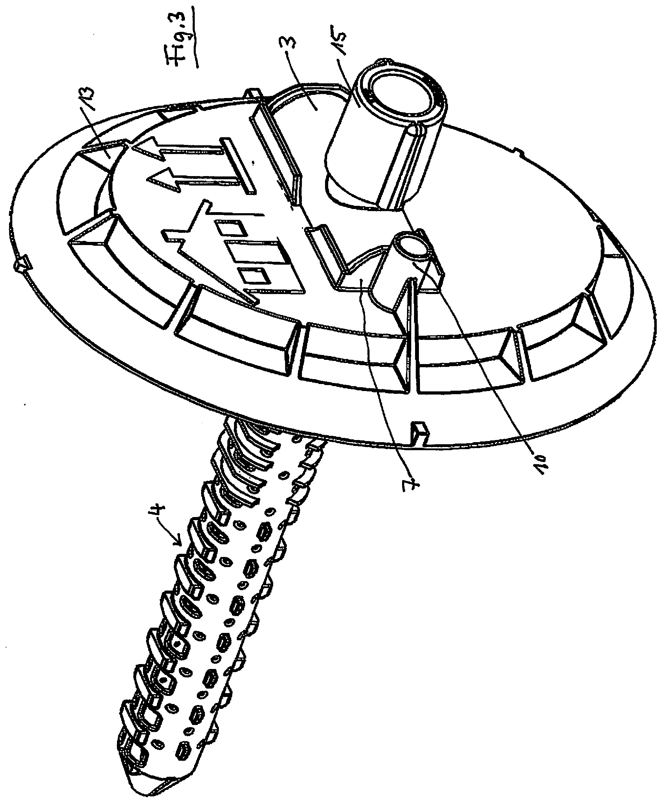

Figur 3 eine perspektivische Ansicht des Außenflanschs mit eingesetztem Lochrohr;
Figur 4 eine perspektivische Innenansicht des Außenflanschs mit einer 0°-Lage des Lochrohrs zum Einsetzen in eine horizontale Wandbohrung;
Figur 5 den Außenflansch mit schräg nach unten gerichtetem Lochrohr;
Figur 6 den Außenflansch mit schräg nach oben gerichtetem Lochrohr.

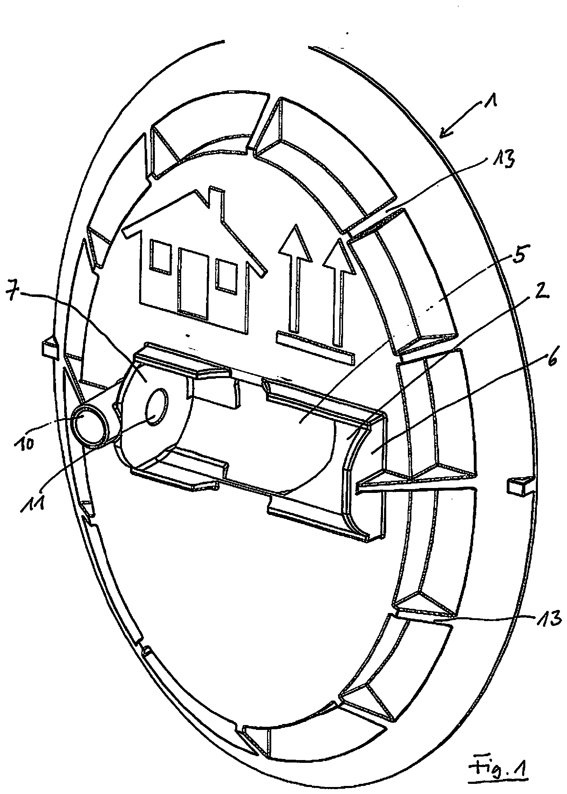

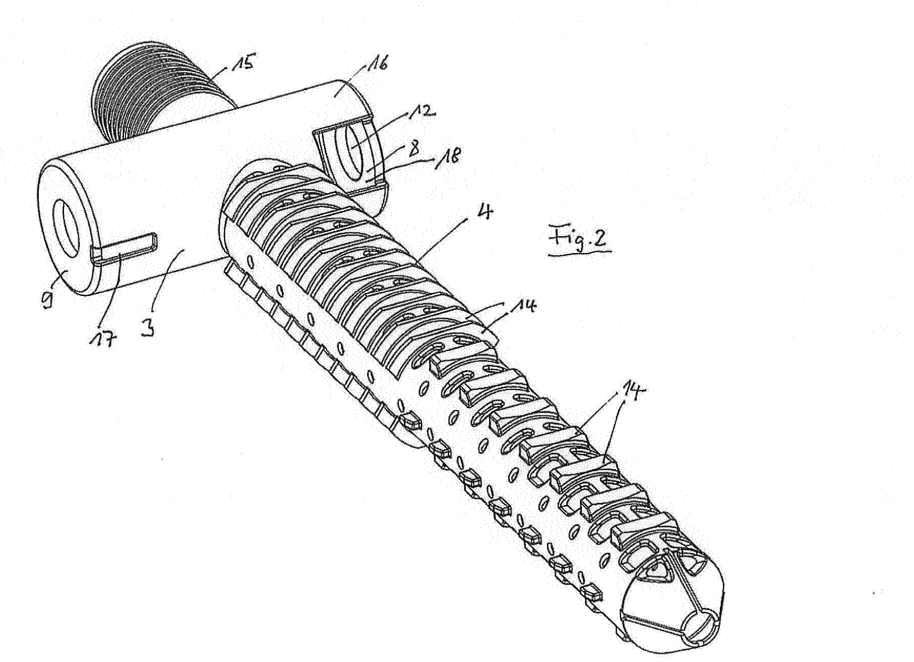

Figur 1 zeigt die Außenseite einer bevorzugten Ausführungsform eines Außenflanschs 1, der eine ovale Tellerform hat und in der Einbaulage mit seinem umlaufenden Rand an die Außenwand eines Gebäudes angepresst wird und dabei eine durch die Gebäudewand führende Wandbohrung außen überdeckt. In der Mitte des Außenflanschs 1 ist eine Lagerschale 2 geformt, die zur Aufnahme eines Rohrstücks 3 (Figur 2) bestimmt ist, das mit einem Lochrohr 4 einstückig verbunden ist und dessen Schwenkachse bildet. In der Wand des Außenflanschs 1 ist im Bereich der Lagerschale 2 eine Öffnung 5 ausgebildet, durch die das Lochrohr 4 hindurchgesteckt wird, wenn das die Schwenkachse bildende Rohrstück 3 in die Lagerschale 2 in einem leichten Klemmsitz eingesetzt wird.

Die Lagerschale 2 enthält zwei seitliche Stirnwände 6 und 7, zwischen denen das Rohrstück 3 mit seinen seitlichen Stirnwänden 8 und 9 gehalten ist.

Neben der Stirnwand 7 der Lagerschale 2 ist ein kleiner Rohrstutzen 10 angeformt, der in ein Loch 11 in der Stirnwand 7 der Lagerschale 2 einmündet. Zum Ausschäumen der Wandbohrung wird durch diesen Rohrstutzen 10 eine zunächst zähflüssige, dann aufschäumende und erhärtende Füllsubstanz eingefüllt, die durch das Loch 11 und ein damit fluchtendes Loch 12 in der seitlichen Stirnwand 8 des Rohrstücks 3 eintritt. Der Innenraum des kreiszylindrischen Rohrstücks 3 steht mit dem Innenraum des Lochrohrs in Verbindung, so dass die aufschäumende Füllsubstanz in das Lochrohr gelangt. Aus Stabilitätsgründen sind auf der Oberseite des Außenflanschs 1 Stege 13 ausgebildet, die dem Außenflansch die erforderliche Festigkeit verleihen.

Figur 2 zeigt das Lochrohr 4 mit dem angeformten Rohrstück 3, das die Schwenkachse bildet und in der Lagerschale 2 zwischen einem oberen und einem unteren Anschlag in einer Ebene verschwenkbar ist. Das Lochrohr 4 enthält neben einer Vielzahl von Löchern unterschiedlicher Größe zahlreiche Rippen 14, die dazu beitragen, dass die aus den Löchern ausgetretene aufgeschäumte und erhärtete Füllsubstanz dauerhaft an dem Lochrohr 4 anhaftet. Das Lochrohr 4 erstreckt sich mit einem rohrförmigen Ansatz 15 über das Rohrstück 3 hinaus. Die nicht dargestellte Leitung, vorzugsweise wenigstens eine Speedpipe, die durch die Wandbohrung ins Innere eines Gebäudes verläuft, wird durch den Ansatz 15 durch das Lochrohr 4 geführt. Die Leitung tritt aus dem verengten Endabschnitt des Lochrohrs 4 aus und verläuft weiter zu dem an der Innenwand anliegenden Innenflansch.

In der Umfangswand 16 des hohlen Rohrstücks 3 sind zwei Öffnungen 17 und 18 ausgebildet. Die Öffnung 17 befindet sich am linken seitlichen Ende des Rohrstücks 3, während die Öffnung 18 an dem gegenüberliegenden Endbereich ausgebildet ist. Die Öffnung 17 hat eine Schlitzform, vorzugsweise mit den Abmessungen 3 mm × 10 mm. Die Öffnung 18 hat etwa die Form eines Quadrats und ist erheblich größer, vorzugsweise mit den Abmessungen 10 mm × 10 mm. Die Lagerschale 2 ist so ausgebildet, dass sie in Abhängigkeit von der Winkellage des Lochrohres 4 und damit von dem Verlauf der Wandbohrung entweder eine der beiden Öffnungen 17, 18, freilegt oder aber beide Öffnungen 17 und 18 verschließt.

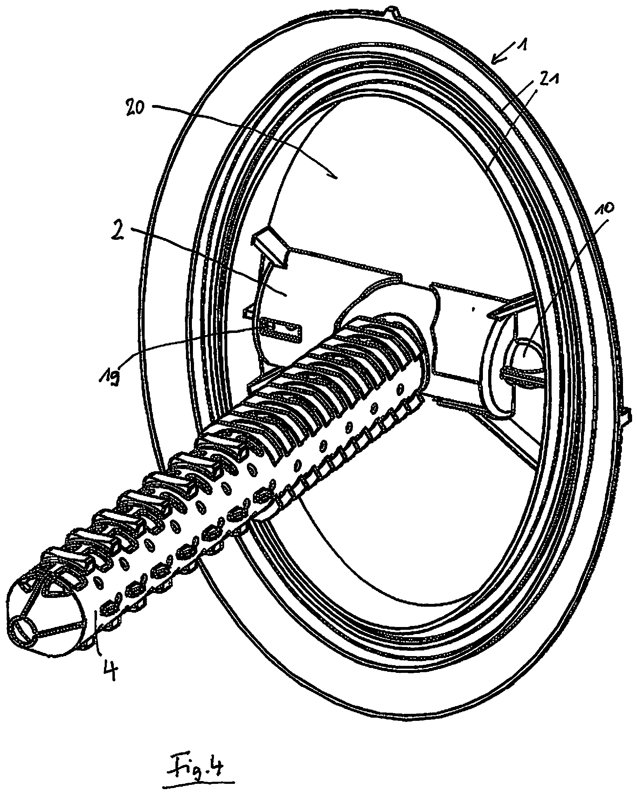

Figur 4 zeigt die in der Einbaulage horizontale Ausrichtung des Lochrohrs 4, d.h. in der 0°-Stellung. In dieser Lage überdeckt eine schlitzförmige Öffnung 19 in der Lagerschale 2 die schlitzförmige Öffnung 17 des Rohrstücks 3, während die Lagerschale 2 auf der anderen Seite die Öffnung 18 in dem Rohrstück 3 überdeckt und damit verschließt. Dies hat zur Folge, dass die durch den Rohrstutzen 10 ins Innere des Rohrstücks 3 zugeführte, zunächst zähflüssige und später aufschäumende und erhärtende Substanz zum großen Teil ins Innere des Lochrohres 4 und mit einem kleinen Anteil durch die Öffnungen 17, 19 in den Innenraum 20 des Außenflanschs 1 fließt. Hierdurch ist gewährleistet, dass der eingesenkte bzw. konkave Innenraum 20 mit der aufgeschäumten Füllsubstanz ausgefüllt wird, so dass der Außenflansch 1 wasserdicht und gasdicht an der Gebäudewand anliegt. Figur 4 lässt zudem erkennen, dass im Abstand von dem Rand des Außenflanschs 1 mehrere umlaufende Dichtlippen 21 angeordnet sind, die verhindern sollen, dass die aufschäumende Füllsubstanz aus dem Außenflansch 1 austritt.

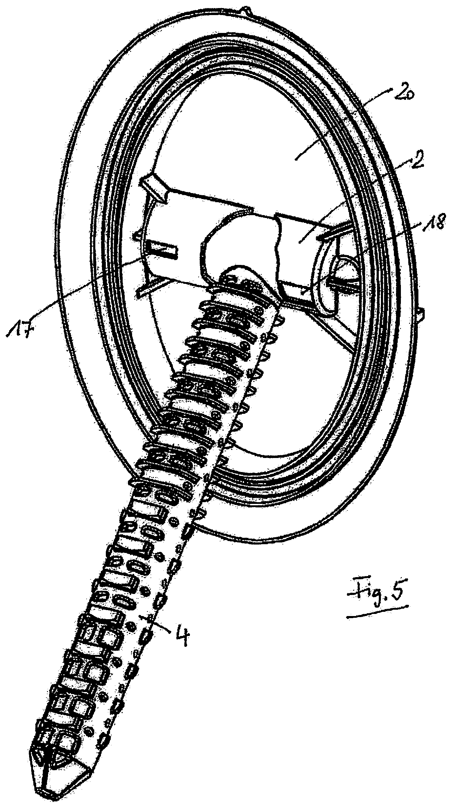

Figur 5 zeigt das Lochrohr 4 in der schräg nach unten gerichteten Endlage, d.h. in der -45°-Stellung. In dieser Stellung ist die Öffnung 18 von der Lagerschale 2 nicht mehr überdeckt, d.h. sie liegt frei, so dass ein Teil der zugeführten Füllsubstanz hier austreten kann. Da die zähflüssige Füllsubstanz erheblich schneller durch das Lochrohr 4 fließt, ist hier die aus der Öffnung austretende Teilmenge größer als in dem vorigen Fall, so dass wieder sichergestellt ist, dass der Innenraum 20 des Außenflanschs 1 ausgefüllt wird. Die Öffnung 17 ist bei dieser Lage verschlossen.

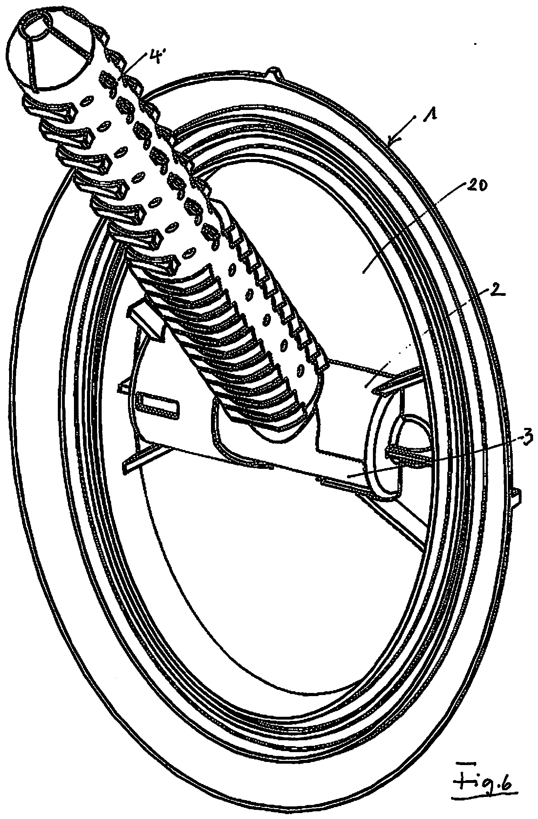

Figur 6 zeigt die schräg nach oben gerichtete Endlage des Lochrohres 4 mit einem Neigungswinkel von + 45°. In dieser Lage sind beide Öffnungen 17 und 18 des Rohrstücks 3 verschlossen, so dass die gesamte Füllsubstanz durch den beim Einfüllen in den Rohrstutzen 10 aufgebrachten Druck in das Lochrohr 4 gedrückt wird. Die aus den Löchern austretende Füllsubstanz fließt bei dieser Lage teilweise am Umfang des Lochrohres 4 zurück zum Innenraum 20 des Außenflanschs 1, so dass auch in diesem Fall der Innenraum des Außenflanschs 1 mit der aufgeschäumten Füllsubstanz gefüllt wird.

## Patentansprüche

1. Vorrichtung zum Durchführen wenigstens einer Leitung durch eine durch eine Gebäudewand führende Wandbohrung, mit einem die Bohrung an der Gebäudeaußenseite überdeckenden, an der Gebäudewand anliegenden Außenflansch (1), durch den die Leitung hindurchführbar ist,
und einem die Bohrung an der Gebäudeinnenseite überdeckenden, an der Gebäudewand anliegenden Innenflansch, durch den die Leitung hindurchführbar ist,
wobei mit dem Außenflansch (1) an dessen Innenseite ein Lochrohr (4) schwenkbar verbunden ist, das die Leitung in der Bohrung wenigstens über einen Teil ihrer Länge mit radialem Abstand umgibt,
und wobei der Außenflansch (1) sowohl bei horizontaler als auch in Winkeln hierzu durch die Gebäudewand führender Bohrung dicht an die Gebäudewand anpressbar ist, und alle Winkel, um die das Lochrohr (4) schwenkbar ist, in einer Ebene liegen,
**dadurch gekennzeichnet,**
**dass** von dem Lochrohr (4) beidseitig ein Rohrstück (3) absteht, dessen Hohlraum mit dem Hohlraum des Lochrohrs (4) in Verbindung steht und das eine Gelenkachse bildet, die in eine etwa halbzylindrische Lagerschale (2) des Außenflanschs (1) eingesetzt ist, in der das Lochrohr (4) mit dem Rohrstück (3) zwischen zwei Anschlägen schwenkbar ist,
**dass** neben der Lagerschale (2) eine Öffnung durch den Außenflansch (1) führt, die mit dem Hohlraum des Rohrstücks (3) in Verbindung steht, so dass von der Außenseite des Außenflansches (1) aus eine zunächst fließfähige, dann aufschäumende und erhärtende Füllsubstanz in das Lochrohr (4) zuführbar ist, und
**dass** das Rohrstück (3) wenigstens eine Öffnung (17) in ihrer zylindrischen Umfangswand hat, die je nach Winkellage des Lochrohrs (4) von der Lagerschale (2) verschlossen ist oder zum Innenraum des Außenflansches (1) hin freiliegt, um einen Teil der zugeführten Füllsubstanz in den Innenraum abzugeben und diesen auszufüllen, so dass der Außenflansch (1) gegenüber der Wand abgedichtet ist.

2. Vorrichtung nach Anspruch 1,
wobei auch in der Wand der Lagerschale (2) wenigstens eine Öffnung (19) ausgebildet ist, die sich mit der wenigstens einen Öffnung (17) des Rohrstücks (3) überdecken kann.

3. Vorrichtung nach einem der Ansprüche 1 oder 2,
wobei zwei Öffnungen (17, 18) in der zylindrischen Umfangswand des Rohrstücks ausgebildet sind.

4. Vorrichtung nach Anspruch 3,
wobei die zwei Öffnungen (17,18) seitlich zueinander versetzt sind und eine unterschiedliche Größe haben.

5. Vorrichtung nach einem der Ansprüche 3 bis 4,
wobei die kleinere Öffnung (17) in der horizontalen Lage des Lochrohres (4) geöffnet ist, während die größere Öffnung (18) durch die Lagerschale (2) geschlossen ist.

6. Vorrichtung nach einem der Ansprüche 3 bis 5,
wobei die größere Öffnung (18) bei einer schräg nach unten weisenden Lage des Lochrohrs (4) geöffnet ist, während die kleinere Öffnung (17) geschlossen ist.

7. Vorrichtung nach einem der Ansprüche 3 bis 6,
wobei die größere (18) und die kleinere (17) Öffnung bei einer schräg nach oben weisenden Lage des Lochrohrs (4) geschlossen sind.

8. Vorrichtung nach einem der Ansprüche 1 bis 7,
wobei das Rohrstück (3) in einem leichten Klemmsitz in der Lagerschale (2) sitzt, so dass es darin verschwenkbar ist.

9. Vorrichtung nach einem der Ansprüche 1 bis 8,
wobei der Außenflansch (1) eine ovale Form hat mit einem eingesenkten Innenraum, der von mehreren umlaufenden Dichtlippen (21) begrenzt ist.

10. Vorrichtung nach einem der Ansprüche 1 bis 9,
wobei der Schwenkwinkel des Lochrohres (4) zwischen etwa + 45° und - 45° liegt.

## Claims

1. Apparatus for conducting at least one conduit through a hole in a building wall with an outer flange (1),which overlaps the hole on the outer side of the building and engages the building wall and through which the conduit may be passed, and an inner flange, which overlaps the hole on the inner side of the building and engages the building wall and through which the conduit may be passed, wherein pivotally connected to the outer flange (1) on its inner side there is an apertured tube (4), which surrounds the conduit in the hole at a radial spacing, at least over a proportion of its length, and wherein the outer flange (1) may be pressed tightly against the building wall when the hole extends both horizontally and at angles thereto and all the angles through which the apertured tube is pivotable lie in a plane, **characterised in that** projecting on both sides from the apertured tube (4) there is a tube piece (3), whose interior is connected to the interior of the apertured tube (4) and which constitutes a joint shaft, which is inserted into an approximately semi-cylindrical bearing shell (2) on the outer flange (1), in which the apertured tube (4) is pivotable with the tube piece (3) between two abutments, that adjacent to the bearing shell (2) an opening extends through the outer flange (1), which is connected to the interior of the tube piece (3) so that a filler material, which is initially flowable and then foams and sets, may be supplied into the apertured tube (4) from the outer side of the outer flange (1), and that the tube piece (3) has at least one opening (17) in its cylindrical peripheral wall, which is closed by the bearing shell (2) or is exposed to the interior of the outer flange (1), depending on the angular position of the apertured tube (4) in order to deliver a proportion of the supplied filler material into the interior so that the outer flange (1) is sealed with respect to the wall.

2. Apparatus as claimed in Claim 1, wherein also formed in the wall of the bearing shell (2) there is at least one opening (19), which can overlap with the at least one opening (17) in the tube piece (3).

3. Apparatus as claimed in one of Claims 1 or 2, wherein formed in the cylindrical peripheral wall of the tube piece there are two openings (17, 18).

4. Apparatus as claimed in Claim 3, wherein the two openings (17, 18) are laterally offset from one another and have a different size.

5. Apparatus as claimed in one of Claims 3 to 4, wherein the smaller opening (17) is open in the horizontal position of the apertured tube (4) whilst the larger opening (18) is closed by the bearing shell (2).

6. Apparatus as claimed in one of Claims 3 to 5, wherein the larger opening (18) is open at an obliquely downwardly directed position of the apertured tube (4) whilst the smaller opening (17) is closed.

7. Apparatus as claimed in one of Claims 3 to 6, wherein the larger (18) and the smaller (17) openings are closed in an obliquely downwardly directed position of the apertured tube (4).

8. Apparatus as claimed in one of Claims 1 to 7, wherein the tube piece (3) is a light force fit in the bearing shell (2) so that it is pivotable therein.

9. Apparatus as claimed in one of Claims 1 to 8, wherein the outer flange (1) has an oval shape with a recessed interior, which is bounded by a plurality of peripheral sealing lips (21).

10. Apparatus as claimed in one of Claims 1 to 9, wherein the pivotal angle of the apertured tube (4) is between about +45° and -45°.

## Revendications

1. Dispositif pour faire passer au moins une conduite à travers un alésage de paroi menant à travers une paroi de bâtiment, avec un flasque extérieur (1) recouvrant l'alésage sur le côté extérieur de bâtiment, reposant sur la paroi de bâtiment, à travers lequel la conduite peut être guidée de part en part,
et un flasque intérieur recouvrant l'alésage sur le côté intérieur de bâtiment, reposant sur la paroi de bâtiment, à travers lequel la conduite peut être guidée de part en part,
dans lequel est relié de manière à pouvoir pivoter au flasque extérieur (1) sur son côté intérieur un tube perforé (4), qui entoure la conduite dans l'alésage au moins sur une partie de sa longueur à une distance radiale,
et dans lequel le flasque extérieur (1) peut être appliqué par pression de manière étanche sur la paroi de bâtiment à la fois quand l'alésage est horizontal ou mène à travers la paroi de bâtiment selon des angles, et tous les angles selon lesquels le tube perforé (4) peut pivoter se situent dans un plan,
**caractérisé en ce**
**que** dépasse du tube perforé (4) des deux côtés une pièce tubulaire (3) dont l'espace creux est relié à l'espace creux du tube perforé (4) et qui forme un axe d'articulation, qui est inséré dans un coussinet de palier (2) à peu près demi-cylindrique du flasque extérieur (1), dans lequel le tube perforé (4) peut être pivoté avec la pièce tubulaire (3) entre deux butées,
**qu'**outre le coussinet de palier (2), une ouverture mène à travers le flasque extérieur (1), laquelle est reliée à l'espace creux de la pièce tubulaire (3) de telle sorte qu'une substance de remplissage d'abord pouvant couler, puis intumescente et durcissante peut être amenée dans le tube perforé (4) depuis le côté extérieur du flasque extérieur (1), et
**que** la pièce tubulaire (3) a au moins un orifice (17) dans sa paroi périphérique cylindrique, qui est fermé selon la position angulaire du tube perforé (4) par le coussinet de palier (2) ou reste dégagé en direction de l'espace intérieur du flasque extérieur (1) pour distribuer une partie de la substance de remplissage amenée dans l'espace intérieur et pour remplir ce dernier de sorte que le flasque extérieur (1) est étanchéifié par rapport à la paroi.

2. Dispositif selon la revendication 1,
dans lequel est réalisée également dans la paroi du coussinet de palier (2) au moins une ouverture (19) qui peut coïncider avec l'au moins une ouverture (17) de la pièce tubulaire (3).

3. Dispositif selon l'une quelconque des revendications 1 ou 2,
dans lequel deux ouvertures (17, 18) sont réalisées dans la paroi périphérique cylindrique de la pièce tubulaire.

4. Dispositif selon la revendication 3,
dans lequel les deux ouvertures (17, 18) sont décalées latéralement l'une par rapport à l'autre et ont une taille différente.

5. Dispositif selon l'une quelconque des revendications 3 à 4,
dans lequel l'ouverture la plus petite (17) est ouverte dans la position horizontale du tube perforé (4) tandis que l'ouverture la plus grande (18) est fermée par le coussinet de palier (2).

6. Dispositif selon l'une quelconque des revendications 3 à 5,
dans lequel l'ouverture la plus grande (18) est ouverte lorsque le tube perforé (4) se trouve dans une position pointant vers le bas à l'oblique, tandis que l'ouverture la plus petite (17) est fermée.

7. Dispositif selon l'une quelconque des revendications 3 à 6,
dans lequel l'ouverture la plus grande (18) et l'ouverture la plus petite (17) sont fermées quand le tube perforé (4) se trouve dans une position pointant vers le haut à l'oblique.

8. Dispositif selon l'une quelconque des revendications 1 à 7,
dans lequel la pièce tubulaire (3) siège selon un ajustement légèrement serré dans le coussinet de palier (2) de telle sorte qu'elle peut y être pivotée.

9. Dispositif selon l'une quelconque des revendications 1 à 8,
dans lequel le flasque extérieur (1) a une forme ovale avec un espace intérieur enfoncé, qui est délimité par plusieurs lèvres d'étanchéité (21) périphériques.

10. Dispositif selon l'une quelconque des revendications 1 à 9,
dans lequel l'angle de pivotement du tube perforé (4) se situe entre environ + 45° et - 45°.
